# EUROPÄISCHE PATENTSCHRIFT

(11) **EP 0 943 496 B1**
(45) Veröffentlichungstag und Bekanntmachung des Hinweises auf die Patenterteilung: **21.05.2003**
(21) Anmeldenummer: 99102665.9
(22) Anmeldetag: 12.02.1999
(51) Int. Cl.: B60R 11/02

(54) **Autoradio mit abklappbarer Front**
Car radio with pivotable front
Auto-radio avec front rabattable

(30) Priorität: 20.03.1998 DE 19812146
(43) Veröffentlichungstag der Anmeldung: 22.09.1999
(73) Patentinhaber: BECKER GmbH, D-76307 Karlsbad (DE)
(72) Erfinder: Gaissert, Helmut, 75179 Pforzheim (DE); Mayer, Werner, 76307 Karlsbad-Mutschelbach (DE)
(74) Vertreter: Patentanwälte Westphal, Mussgnug & Partner

(56) Entgegenhaltungen:
- EP-A- 0 799 747
- DE-A- 19 535 678
- DE-A- 19 730 793
- US-A- 5 524 859
- PATENT ABSTRACTS OF JAPAN vol. 016, no. 113 (P-1327), 19. März 1992 (1992-03-19) & JP 03 283041 A (MATSUSHITA ELECTRIC IND CO LTD), 13. Dezember 1991 (1991-12-13)

## Beschreibung

Die Erfindung betrifft ein Autoradio mit einem Gehäuse mit abklappbarer Front nach dem Oberbegriff des Anspruchs 1.

Ein solches Autoradio ist aus US-A-5,524,859 bekannt. Dort ist ein Autoradio mit einem Gehäuse mit abklappbarer Front und einem Mediaplayer beschrieben, dessen Tonträger durch eine Öffnung im Gehäuse des Autoradios vollständig einführbar ist. Die Öffnung ist so angeordnet, daß sie bei abgeklappter Front zur Einführung des Tonträgers zugänglich und bei nicht abgeklappter Front für den Zugriff verschlossen ist. Darüber hinaus ist ein Servoelement mit Übertragungsmechanik vorgesehen, durch welche die Servobewegung des Servoelements zum Abklappen und/oder Zuklappen der abklappbaren Front verwendbar ist.

Aus JP 03-283041 ist ein Mediaplayer bekannt, dessen Front beim Abklappen und Zuklappen gleichzeitig die Tonträger in Spielposition einbringt bzw. ausbringt.

Der Erfindung liegt die Aufgabe zu Grunde, ein Autoradio mit abklappbarer Front zu schaffen, welches sehr bedienfreundlich ist, ohne daß das Autoradio in der Konstruktion wesentlich aufwendiger, anfälliger für Defekte und in der Herstellung und damit im Vertrieb deutlich teuer ist.

Die Aufgabe wird erfindungsgemäß durch ein Autoradio mit abklappbarer Front mit den Merkmalen des Anspruchs 1 gelöst.

Vorteilhafte Weiterbildungen ergeben sich aus den Unteransprüchen.

Erfindungsgemäß wird das Autoradio mit einem Gehäuse mit abklappbarer Front und mit einem Mediaplayer versehen, welcher ein Servoelement typischerweise in Form eines Elektromotors ausweist. Dieses Servoelement ist mit einer Übertragungsmechanik verbunden, welche die Servobewegungen des Servoelements an die abklappbare Front des Gehäuses des Autoradios überträgt. Mittels der Bewegung des Servoelements des Mediaplayers wird nun die abklappbare Front vom nicht abgeklappten Zustand in den abgeklappten Zustand oder umgekehrt überführt. Nach dem Abklappen der Front mittels des Servoelements kann nun der Ton-/Bildträger in den Mediaplayer durch eine Öffnung im Gehäuse, welche durch das servoelementenunterstützte Abklappen freigegeben wurde, eingeführt oder aus diesen entnommen werden. Dabei kann das Auslösen der Servoelementenbewegung beispielsweise durch Betätigen einer Taste am Gehäuse des Autoradios zum Abklappen der Front erfolgen. Auch ist es möglich, neben oder auch anstelle des Abklappens aufgrund der Bewegung des Servoelementes die Front mittels des Servoelementes zuzuklappen. Dabei wird wie auch im Fall des Abklappens die Bewegung des Servoelementes mittels einer Übertragungsmechanik auf die Front übertragen, welche in diesem Fall vom abgeklappten Zustand in den geschlossenen, nicht abgeklappten Zustand übergeht. Durch diese Betätigung mittels des Servoelementes kann auf Aktivitäten des Menschen weitgehend verzichtet werden, was die Bedienungsfreundlichkeit des Gerätes deutlich erhöht. Dabei erfolgt die Betätigung der Front durch ein oder mehrere Servoelemente des Mediaplayers. Damit gelingt es erfindungsgemäß auf zusätzliche Servoelemente in dem übrigen Autoradio zu verzichten und auf bereits vorhandene Servoelemente zurückzugreifen. Damit wird deutlich, daß für das erfindungsgemäße Autoradio bei einer deutlich erhöhten Bedienfreundlichkeit gegenüber der rein mechanischen handbetätigten Lösung vergleichbar viele Bauteile für den Bau des Autoradios verwendet werden. Dies hat im Hinblick auf die identischen bzw. vergleichbaren Bauteile auch vergleichbare Kosten. zur Folge. Durch die Verwendung der bereits existierenden Servoelemente mit der allein hinzutretenden Übertragungsmechanik wird auch deutlich, daß durch die begrenzte Anzahl der Bauelemente und deren teilweise identischen Ausführungsform die Anfälligkeit des erfindungsgemäßen Autoradios vergleichbar der der Autoradios mit einer von Hand betätigten abklappbaren Front ist. Somit wird deutlich, daß das erfindungsgemäße Autoradio bei erhöhter Bedienfreundlichkeit sowohl in den Kosten als auch in der Qualität den Autoradios mit handbetätigten, abklappbaren Fronten entspricht. Dies vor dem Hintergrund, daß das Gehäuse der Autoradios einer genormten Größe entsprechen muß und dadurch im Innern des Autoradios für derartige technische Lösungen zur Verbesserung der Bedienfreundlichkeit, zur Erhöhung der Qualität nur ein ganz eingeschränkter Raum zur Verfügung steht.

Als besonders vorteilhaft hat sich bei einem erfindungsgemäßen Autoradio mit abklappbarer Front mit einem Mediaplayer, der seinen Bild-/Tonträger mittels eines Servoelementes einzieht oder auswirft, herausgestellt, gerade dieses Servoelement neben der Verwendung für die Einzieh- bzw. für die Auswerfbewegung auch für das Ab- und/oder Zuklappen der abklappbaren Front zu verwenden. Gerade dieses Servoelement erweist sich unter den verschiedenen Servoelementen des Mediaplayers als besonders geeignet für das Abklappen und/oder Zuklappen der Front, da es aufgrund der großen, raumgreifenden Auswerf- bzw. Einziehbewegung für die entsprechende Verwendung einer entsprechend ausgeprägten, langen Bewegung der Übertragungsmechanik besonders geeignet ist. Diese Ausbildung mit einer langen Bewegung der Übertragungsmechanik stellt ein sehr weiches und präzises Bewegen der abklappbaren Front sicher, wobei insbesondere die Endpositionen sehr exakt erreicht und über die Lebensdauer beibehalten werden können. Mithin erweist sich die Verwendung gerade des Servoelementes für das Einziehen bzw. Auswerfen des Ton-/Bildträgers des Mediaplayers neben der Verwendung für das Ab- bzw. Zuklappen der Front als besonders vorteilhaft.

Vorzugsweise zeigt das Autoradio eine Steuerung zur zeitlich aufeinanderfolgenden Durchführung der Abklappbewegung der Front vor der Auswurfbewegung des Bild-/Tonträgers aus dem Mediaplayer, wobei diese beiden Bewegungen durch das Servoelement ausgelöst bzw. durchgeführt werden. Dabei kann die Steuerung auch als einfaches Steuerwerk ausgebildet sein. Durch diese spezielle Ausbildung des Autoradios mit der entsprechenden Steuerung ist gewährleistet, daß die Bedienfreundlichkeit bei einer erhöhten Bediensicherheit gegeben ist. Die Steuerung bzw. das Steuerwerk kann eine Kupplung aufweisen, welche die Bewegung des Servoelementes entweder dem Bild-/Tonträger oder der abklappbaren Front zuweist. Auch ist es möglich, daß für eine begrenzte Zeit eine gleichzeitige Betätigung beider Bauelemente dem Bild-/Tonträger sowie der Front möglich ist. Dadurch kann ein optimierter, verkürzter Zeitablauf der beiden Bewegungen erreicht werden. Diese zeitoptimierte Steuerung verbessert wiederum die Bedienfreundlichkeit und damit die Akzeptanz beim Benutzer.

Auf entsprechende Weise kann durch eine entsprechende oder die gleiche Steuerung sichergestellt sein, daß die Einziehbewegung des Bild-/Tonträgers in den Mediaplayer zeitlich der Zuklappbewegung der Front vorangeht, was zu den entsprechenden Vorteilen wie bei der zeitlichen Aufeinanderfolge der Abklappbewegung vor der Auswurfbewegung führt.

Als ideal hat es sich herausgestellt, die Steuerung beider zeitlichen Reihenfolgen durch eine gemeinsame Steuerung zu erreichen und die Bewegungen durch dieselben Servoelemente bzw. Übertragungsmechaniken vornehmen zu lassen, da der eine Ablauf sich aus dem anderen umgekehrten Ablauf durch eine umgekehrte Bewegungsrichtung des Servoelementes ergibt, was bei einem Elektromotor durch die umgekehrte Rotationsrichtung auf sehr einfache Art und Weise erreicht werden kann. Demzufolge muß die Steuerung für die Umkehrung der zeitlichen Abfolge allein die Drehrichtung des Elektromotors umdrehen, um mit ein und derselben mechanischen Struktur den umgekehrten Bewegungsablauf sicher und einfach zu gestalten.

Vorzugsweise wird das erfindungsgemäße Autoradio so ausgebildet, daß die abklappbare Front im nicht abgeklappten Zustand vorgespannt ausgebildet ist und eine Verriegelung zur Fixierung der abklappbaren Front im nicht bgeklappten Zustand vorgesehen ist, welche mit der Übertragungsmechanik dahingehend verbunden ist, daß mittels der Servobewegung die Verriegelung entriegelbar ist und dadurch die abklappbare Front mittels der Vorspannung abgeklappt wird. Dabei kann die Vorspannung durch ein Federelement oder durch die an der abklappbaren Front angreifende Gewichtskraft oder durch dem Fachmann geläufige andere Möglichkeiten der Vorspannung erfolgen und die abklappbare Front aus dem nicht abgeklappten Zustand in die Endstellung des abgeklappten Zustands überführen. Durch diese Ausbildung der Erfindung ist es möglich, auf eine konstruktiv aufwendige Übertragungsmechanik zu verzichten, da die Übertragungsmechanik im Wesentlichen auf die Funktion des Entriegelns reduziert ist. Nach dem Entriegeln kann die Abklappbewegung in einer weiteren bevorzugten Ausführungsform ausschließlich durch die Vorspannung ohne Unterstützung durch die Servobewegung veranlasst sein. Durch die hierdurch möglich weitere Vereinfachung der Übertragungsmechanik kann die Anfälligkeit des und die Kosten für die Herstellung des erfindungsgemäßen Autoradios reduziert werden.

Auf eine vergleichbare Weise ist es auch möglich, daß die Überführung der abklappbaren Front vom abgeklappten Zustand in den nicht abgeklappten Zustand durch eine Vorspannung der abklappbaren Front im abgeklappten Zustand vollständig oder teilweise neben der Unterstützung durch die Servobewegung des Servoelements mittels der Übertragungsmechanik erfolgt. Auch hierbei wird durch die Servobewegung bevorzugt aber nicht notwendigerweise die vorgespannte, abgeklappte Front entriegelt und anschließend die Front mittels der Vorspannung ganz oder teilweise in den nicht abgeklappten Zustand überführt. Mithin zeigt die Erfindung die vergleichbaren Vorteile wie die zuvor genannten Ausführungsformen.

## Patentansprüche

1. Autoradio mit einem Gehäuse mit abklappbarer Front und mit einem Mediaplayer, dessen Ton-/Bildträger durch eine Öffnung im Gehäuse des Autoradios vollständig einführbar ist, wobei die Öffnung so angeordnet ist, daß sie bei abgeklappter Front zur Einführung des Ton-/Bildträgers zugänglich und bei nicht abgeklappter Front für den Zugriff verschlossen ist, und der Mediaplayer ein Servoelement mit Übertragungsmechanik aufweist, durch welche die Servobewegung des Servoelements zum Abklappen und/oder Zuklappen der abklappbaren Front verwendbar ist,
**dadurch gekennzeichnet,**
**daß** das Servoelement des Mediaplayers so ausgebildet ist, daß die Servobewegung des Servoelements sowohl zum Abklappen und/oder Zuklappen der abklappbaren Front als auch zum Auswerfen und/oder zum Einziehen des Bild-/Tonträgers verwendbar ist.

2. Autoradio nach Anspruch 1, **dadurch gekennzeichnet, daß** daß das Servoelement des Mediaplayers so ausgebildet ist, daß die Servobewegung des Servoelements sowohl zum Abklappen der abklappbaren Front als auch zum Auswerfen des Bild-/Tonträgers verwendbar ist und daß eine Steuerung zur zeitlichen Festlegung der Abklapp- und der Auswurfbewegung dahingehend vorgesehen ist, daß die Abklappbewegung vor der Auswurfbewegung durchgeführt wird.

3. Autoradio nach einem der vorhergehenden Ansprüche, **dadurch gekennzeichnet, daß** daß das Servoelement des Mediaplayers so ausgebildet ist, daß die Servobewegung des Servoelements sowohl zum Zuklappen der abklappbaren Front als auch zum Einziehen des Bild-/Tonträgers verwendbar ist und daß eine Steuerung zur zeitlichen Festlegung der Einzieh- und der Zuklappbewegung dahingehend vorgesehen ist, daß die Einziehbewegung vor der Zuklappbewegung durchgeführt wird.

4. Autoradio nach einem der vorhergehenden Ansprüche, **dadurch gekennzeichnet, daß** die abklappbare Front im nicht abgeklappten Zustand vorgespannt ausgebildet ist und eine Verriegelung zur Fixierung der abklappbaren Front im nicht abgeklappten Zustand vorgesehen ist, welche mit der Übertragungsmechanik dahingegen verbunden ist, daß mittels der Servobewegung die Verriegelung entriegelbar ist und dadurch die abklappbare Front durch die Vorspannung abgeklappbar ist.

5. Autoradio nach einem der Ansprüche 1 bis 3, **dadurch gekennzeichnet, daß** die abklappbare Front im abgeklappten Zustand vorgespannt ausgebildet ist und eine Verriegelung zur Fixierung der abklappbaren Front im geöffeten, abgeklappten Zustand vorgesehen ist, welche mit der Übertragungsmechanik dahingegen verbunden ist, daß mittels der Servobewegung die Verriegelung entriegelbar ist und dadurch die abklappbare Front durch die Vorspannung zugeklappbar ist.

## Claims

1. A car radio having a housing with a fold-down front and having a media player, the sound/picture carrier of which can be completely introduced through an aperture in the housing of the car radio, where the aperture is disposed so that when the front is folded down it is accessible for the introduction of the sound/picture carrier, and when the front is not folded down it is barred for access, and the media player comprises a servo element having a transmission mechanism by which the servo movement of the servo element can be used to fold down and/or shut the fold-down front,
**characterised in that** the servo element of the media player is constructed so that the servo movement of the servo element can be used to fold down and/or to shut the fold-down front and also to eject and/or to insert the sound/picture carrier.

2. A car radio according to Claim 1,
**characterised in that** the servo element of the media player is constructed so that the servo movement of the servo element can be used to fold down the fold-down front and also to eject the sound/picture carrier
**and in that** a control device is provided for fixing the time for the folding down and ejection movement so that the folding down movement is performed prior to the ejection movement.

3. A car radio according to one of the preceding Claims,
**characterised in that** the servo element of the media player is constructed so that the servo movement of the servo element can be used to close the fold-down front and also to insert the picture/sound carrier **and in that** a control device is provided for fixing the time for the insertion and the closing movement so that the insertion movement is performed before the closing movement.

4. A car radio according to one of the preceding Claims,
**characterised in that** the fold-down front is pretensioned when it is not folded down and a lock is provided to fix the fold-down front in the non-folded down state, which is connected to the transmission mechanism so that the lock can be unlocked by means of the servo movement and as a result the fold-down front can be folded down by the pretensioning.

5. A car radio according to one of Claims 1 to 3,
**characterised in that** the fold-down front is pretensioned in the folded-down state and a lock is provided to fix the fold-down front in the open, folded-down state, which is connected to the transmission mechanism so that the lock can be unlocked by means of the servo movement and as a result the fold-down front can be closed by the pretensioning.

## Revendications

1. Autoradio avec un boîtier à façade rabattable et un lecteur dont le support de son et/ou d'image peut être introduit totalement à travers une ouverture du boîtier de l'autoradio disposée de manière à être accessible pour l'introduction du support quand la façade est rabattue tandis qu'elle est fermée quand la façade n'est pas rabattue, le lecteur comportant un servo-élément avec un mécanisme de transmission permettant d'utiliser le servo-mouvement du servo-élément pour ouvrir et/ou fermer la façade rabattable,
**caractérisé en ce que**
le servo-élément du lecteur de support est constitué de manière que son mouvement peut être utilisé aussi bien pour ouvrir et/ou fermer la façade rabattable que pour éjecter et/ou introduire le support de son et/ou d'image.

2. Autoradio selon la revendication 1,
**caractérisé en ce que**
le servo-élément du lecteur est constitué de maniêre que son mouvement peut être utilisé aussi bien pour ouvrir et/ou fermer la façade rabattable que pour éjecter et/ou introduire le support de son et/ou d'image, et il est prévu pour cela une commande déterminant dans le temps le mouvement de rabattement et le mouvement d'éjection de maniére que le premier ait lieu avant le second.

3. Autoradio selon la revendication 1 ou 2,
**caractérisé en ce que**
le servo-élément du lecteur est constitué de manière que son mouvement peut être utilisé aussi bien pour ouvrir et/ou fermer la façade rabattable que pour éjecter et/ou introduire le support de son et/ou d'image, et il est prévu pour cela une commande déterminant dans le temps le mouvement d'introduction et le mouvement de fermeture de manière que le premier ait lieu avant le second.

4. Autoradio selon l'une des revendications précédentes,
**caractérisé en ce que**
la façade rabattable est conçue pour être sous précontrainte quand elle n'est pas rabattue et il est prévu, pour fixer la façade dans cet état, un verrouillage relié au mécanisme de transmission de manière que le servo-mouvement libère le verrouillage et permet ainsi à la façade de s'ouvrir en se rabattant sous l'effet de la précontrainte.

5. Autoradio selon l'une des revendications 1 à 3,
**caractérisé en ce que**
la façade rabattable est conçue pour être sous précontrainte quand elle est rabattue et il est prévu, pour fixer la façade dans cet état, un verrouillage relié au mécanisme de transmission de manière que le servo-mouvement libère le verrouillage et permet ainsi à la façade de se fermer en se relevant sous l'effet de la précontrainte.
